# EUROPEAN PATENT SPECIFICATION

(11) **EP 1 334 308 B1**
(45) Date of publication and mention of the grant of the patent: **20.09.2006**
(21) Application number: 01273543.7
(22) Date of filing: 26.10.2001
(51) Int. Cl.: B29B 7/74, B05B 1/30, B29B 7/76, B01F 15/04

(54) **MULTI-COMPONENT FOAM DISPENSER WITH IMPROVED FLOW METERING MEANS**
MEHRKOMPONENTEN-SCHAUMSPENDER MIT VERBESSERTER STRÖMUNGSDOSIERUNG
DISTRIBUTEUR DE MOUSSE A PLUSIEURS COMPOSANTS COMPRENANT UN DISPOSITIF AMELIORE DE REGULATION DU DEBIT

(30) Priority: 06.11.2000 US 706935
(43) Date of publication of application: 13.08.2003
(73) Proprietor: Flexible Products Company, Mariette, GA 30062 (US)
(72) Inventor: BROWN, Daniel, P., Palos Park, IL 60464 (US); DEAN, Michael, Alpharetta, GA 30004 (US)
(74) Representative: Raynor, John
(86) International application number: PCT/US2001/051500
(87) International publication number: WO 2002/075210

(56) References cited:
- EP-A- 0 283 988
- GB-A- 1 530 339
- US-A- 4 653 691
- US-A- 4 676 437
- US-A- 4 721 602
- US-A- 4 925 107
- US-A- 5 529 245
- US-A- 5 944 259

## Description

### Background Of The Invention

The present invention relates generally to mixing and dispensing apparatus used in the polyurethane foam industry, and move particularly to a novel means for metering on ratio the flow of foam components through the dispenser.

The use of urethane foams is commonplace in the building industry. Urethane foams are used as adhesives, as insulation material, as roofing components, etc. Most urethane foams used in these applications are the reaction product of two individual components, one being an "A" or isocyanide component and the other being a "B", or resin component. These components are mixed together to typically form an expansive foam.

In operation, separate containers of the A and B components are used in conjunction with a dispensing gun in which the flow of each of the A and B components is controlled as they pass through the dispensing gun into a mixing and discharge nozzle. U.S. Patent No. 5,529,245, issued June 25, 1996 and U.S. Patent No. 5,944,259, issued August 31, 1999 to the assignee of the present invention describe two constructions of foam-component dispensing guns.

In each such construction, the gun has a body portion that at a rear end portion thereof, receives and which houses two inlets connectable to the foam component supply containers. The gun body also contains a mixing and discharge nozzle at a front end thereof. A rotatable spool valve is rotatably mounted in the gun body and spool valve has two passages formed in a body portion which provide two pathways between the inlets and the nozzle mixing and discharge. This valve is rotated when the trigger of the gun is moved toward the gun handle.

This rotation brings the two valve passages into alignment with passages formed in both the mixing and discharge nozzle and the inlets. All of the passages in these known dispensing guns are circular in cross-section. Metering of the foam components discharged through the nozzle is achieved by slowly depressing the trigger and moving it toward the handle. Although this action produces adequate results, it is still difficult to obtain low-flow dispensing of the foam components that might be obtained using a needle valve.

In order to provide foam dispensers that accurately meter and dispense foam at low flow conditions, the industry has utilized needle valves for controlling the flow. In a typical needle valve, a needle is held within a bore and in moved in and out of the passage by means of a moveable stem mounting in order to adjust the size of the annular passage that is formed between the needle and the bore.

Needle valves work very well for controlling the flow of a single stream of a liquid or a gas. It is difficult, however, to couple together the adjustment of two needle valves on two streams of liquid/gas so that an exact ratio between the two streams is obtained. In order to do so, each stream must be activated simultaneously with a consistent rate of change and at similar degrees over the opening and closing of the valves. The viscous and highly reactive nature of the foam components, particularly the isocyanide component, causes the needle to often stick in its bore, necessitating frequent disassembly and cleaning and/or replacement of the needles or even replacement of the entire dispenser. It is also difficult to the the two needles of the needle valve together in a manner so that movement of one needle effects a similar movement of the other needle to obtain the needed ratio.

Also, the phenomena of "lead lag" has been noted in the use of foam dispensers that use needle valves. These occur at low-flow conditions when one of the two needles unseat ahead or after the other when this occurs, it creates an "off-ratio" situation where the amount of one flow component does not match the desired amount that must combine with another desired amount of the other flow component. As such, the desired ratio of the two reactive foam components is not met, thereby resulting off-ratio foam in which the two reactive components do not completely combine. This lead lag is also affected by the viscosities of the foam components, and the rate and velocity of the flow. This is cause by the aforementioned inability to effectively tie the two needles together so that precise seating and unseating of the needles will occur.

The present invention is therefore directed to a dispensing apparatus with an improved flow metering assembly that overcomes the aforementioned disadvantages.

### Summary Of The Invention

Accordingly, it is a general object of the present invention to provide a foam component dispensing gun that accurately dispenses foam at low flow conditions comparable to that obtained using a needle valve.

Another object of the present invention is to provide an improved dispensing gun for the dispensing of fluids that uses a spool valve rotatably mounted in the body of the gun and in which the gun body includes pairs of aligned, but dissimilar flow passages in a horizontal orientation that provide accurate metering of fluid components at low flows, particularly polyurethane foam components.

Yet still another object of the present invention is to provide a fluid dispensing apparatus which dispenses streams of two distinct fluids, typically reactive, polyurethane foam components, in which the apparatus utilizes geometric passage means for controlling the ratio of the two fluids.

Still another object of the present invention is to provide a multiple fluid component dispenser having a body portion with a spool valve rotatably mounted therein, the spool valve having a pair of cylindrical passages formed therein for the passage of fluid components therethrough, and the gun body having a pair of inlet passages formed therein and terminating at seats adjacent the spool valve, the seats being aligned with two inlet connections so that rotation of the spool valve brings the spool valve passages into alignment and communication with the dispenser body seats, wherein the dispenser body seats have a different shape than the cylindrical spool valve passages, the different shapes providing a more restricted passage volume at low flow conditions to more effectively meter foam components.

A further object of the present invention is to provide a foam dispensing gun with a more accurate low-flow metering capability than presently available, the gun having a body portion with a pair of non-circular cross-section foam component seats formed therein, the gun body further having a spool valve rotatably mounted therein, including a pair of circular cross-section passages, the non-circular cross-section passages having a profile with a narrow leading edge portion that expands to a baseline thereby increasing the cross-sectional area of the intersection formed at the interface between the dispenser seats and spool valve passages through which the foam components may pass.

A still further object of the present invention is to provide an improved foam dispenser having a body portion in which a spool valve is rotatably mounted, a trigger engaging the spool valve for rotating the spool valve within the dispenser body portion, the spool valve having two district foam component flow passages formed therein, and the dispenser body portion having a pair of inlet passages formed in the dispenser body for mating with the spool valve passages wherein the improvement includes the dispenser body inlet passages being formed with non-circular cross-sections, each such inlet passage cross-section having a narrow initial throat portion that opens up to a wide base portion, the initial throat portions of the seats being oriented in opposition to the direction of rotation of the spool valve so that the seat narrow throat portions first intersect and communicate with the spool valve passages at low flow positions of the dispenser.

The present invention accomplishes these and other objects through its unique and novel structure. In this regard and in one principal aspect of the present invention, as exemplified by one embodiment of the invention, the fluid dispensing apparatus may take the form of a gun with a cylindrical body portion. A pair of inlet connections are set within the body portion and have openings formed therein that provide a means for connecting two supplies of separate foam components to the dispensing apparatus. The dispensing apparatus also may have a mixing and discharge nozzle that removably engages the body portion. The nozzle also has two inlets received within the body portion. A spool valve is rotatably mounted within a cavity formed in the body portion and is interposed between the nozzle inlets and inlets leading to the inlet connections. The spool valve has a pair of internal cylindrical foam component flow passages formed therein, while two corresponding passages are formed in seats of the body portion that lead from the inlet connections to the cavity in which the spool valve rotates. Geometry is utilized so that the spool valve passages are formed with cross-sections that are different than the cross-sections of the passages in the seats of the body portions.

In another principal aspect of the invention, the cross-sections of the seat passages have a non-circular cross-section and preferably take the shape of a polygon, such as a triangle or a trapezoid. These polygonal shapes have at least two interior corners and have a cross-sectional area that increases from a leading edge of the passages to common baselines of the passages in a direction that is the same as the direction of rotation of the spool valve. By this relationship, the spool valve passages will intersect with the seats at their narrow portions first to give the necessary control at low flow conditions. Both the spool valve passages and the seat passages are aligned with each other along axes of the dispenser seat and the spool valve. In this manner, the open area defined by the intersection of the two passages remains identical and increases in the same incremental manner for both passages.

The cross-sections of the dispenser seat passages take the shapes of polygons, such as triangles, trapezoids or the like that have a narrow portion that leads to a wider portion. These shapes all include at least two interior corners that at least partially define the shape of the cross-section. The sizes of the pairs of passages are equal so that the rate of change of intersection of the passages will be the same for each fluid component passage, thereby keeping the entire system on ratio throughout the full range of motion of the activating trigger of the dispensing apparatus.

These and other objects, features and advantages of the present invention will be clearly understood through consideration of the following detailed description.

### Brief Description Of The Drawings

FIG. 1 is a perspective view of a known dispensing gun used to mix foam components and dispense the mixed components as a foam;
FIG. 2 is a sectional view of a hand-held dispenser incorporating the principles of the present invention;
FIG. 3 is a perspective view of a rotatable spool valve used in the dispenser of FIG. 2;
FIG. 4 is a sectional view of the body portion of the dispenser of FIG. 2 with the spool valve in place thereon and illustrating the alignment and mating of the foam component passages after movement of the dispenser trigger from position A to position B;
FIG. 5 is a diagrammatic sectional view of the dispenser body portion of FIG. 4 taken generally along lines 5-5 thereof;
FIG. 6 is an enlarged cross-sectional detail view of the dispenser of FIG. 2 illustrating the spool valve flow passage and the inlet passage of the dispenser body portion in their closed and mating positions;
FIG.7A is an enlarged sectional detail view illustrating the interface between the spool valve flow passages and the dispenser body inlet passages at an initial mating position therebetween;
FIG.7B is the same view as FIG. 7A but with the spool valve rotated incrementally counterclockwise to increase the amount of area of the spool valve flow passages that mate with the dispenser body inlet passages;
FIG. 7C is the same view as FIG. 7B, but with the spool valve further incrementally rotated counterclockwise;
FIG. 8A is a diagrammatic view illustrating the sequential intersections of the spool valve inlet passage (shown in broken line) and the dispenser body portion inlet passage (shown in solid lines) which correspond generally to the positions illustrated in FIGS. 7A-7C;
FIG. 8B is a similar diagrammatic view, but showing the use and intersection of two triangular orifices;
FIG. 9 is a diagrammatic sectional view of the dispenser body portion illustrating another configuration of the dispenser body inlet passages;
FIG. 10 is a diagrammatic sectional view of the dispenser body portion illustrating another configuration of the dispenser body inlet passages;
FIG. 11 is a diagrammatic sectional view of the dispenser body portion illustrating another configuration of the dispenser body inlet passages;
FIG. 12 is another diagrammatic view illustrating the superimpostion of incremental advancements of a spool valve flow passage on an inlet passage;
FIG.13 is a diagrammatic view of an alternate arrangement of two different cross-sectional passages used with the invention, illustrating the two passages and the progressive intersection thereof;
FIG. 14 is a diagrammatic view of another alternate arrangement of two different cross-sectional passages used with the invention, illustrating the two passages and the progressive intersection thereof;
FIG. 15 is a diagrammatic view of a third alternate arrangement of two different cross-sectional passages used with the invention, illustrating the two passages and the progressive intersection thereof;
FIG. 16 is a diagrammatic view of a fourth alternate arrangement of two different cross-sectional passages used with the invention, illustrating the two passages and the progressive intersection thereof; and
FIG. 17 is a schematic view of the seat of the dispenser body portion illustrating an offset arrangement of flow passages.

### Detailed Description Of The Preferred Embodiments

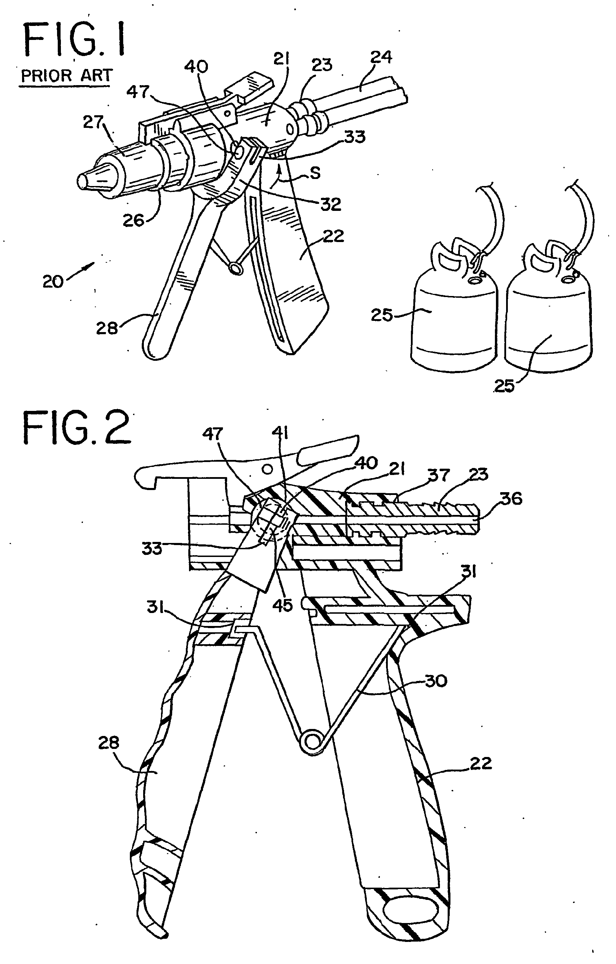

FIG. 1 illustrates generally at 20, a hand-held dispenser that is used to dispense a foam formed from two distinct foam components. The structure of this dispenser 20 is described in U.S. Patent Nos. 4,676,437, issued June 20, 1987, 5,529,245, issued June 25, 1996 and 5,944,259, issued August 31, 1999, all of which are assigned to the assignee of the present invention.

The dispenser 20 has a body portion 21 with a handle 22 depending downwardly therefrom. A pair of inlet fittings 23 are held within recesses in the body portion 21 so as to provide a connection to two hoses 24 that, each lead to a separate supply container 25 containing supplies of the A and B foam components. The forward end 26 of the dispenser body portion 21 has a recess that holds a replaceable dispensing nozzle 27. An actuating trigger 28 is movably mounted to the dispenser body portion 21 and is movable toward the handle 22. Movement of the trigger 28 toward the handle 22 brings a pair of passages (not shown) that are formed in a spool valve 40 mounted for rotation within a cavity of the dispenser body portion 21, into alignment with like passages that are formed in the dispenser body portion 21 and which lead to the inlet fittings 23. In the prior art, the cross-section of the passages in both the spool valve 40 and the dispenser body portion 21 are circular in cross-section. When the spool valve 40 is rotated under urging of the trigger 28 in a counterclockwise direction as indicated by the arrow S in FIG. 1, the top portions thereof will initially intersect with the lower parts of the circular passages in the dispenser body portion 21 to form an oval cross-section. This oval grows in size until the two circular passages are completely aligned together and mate with each other.

The initial intersection of these two passages is used for the dispensing of foam components at low flow conditions. It is hard to accurately meter small amounts of foam components to lay down small diameter beads of expanding foam. Such small beads are capable of being dispensed with accuracy when a needle valve is used. A needle valve must be constantly cleaned because the mixed foam passes through it and costs significantly more than the spool valve arrangement 40 of the dispenser 20 shown. As mentioned above, needle valves are hard to adjust precisely at low-flow conditions to deliver foam components ratio at low flows. The undesirable lead lag phenomena occurs where the movement of one needle is ahead of or behind the other needle. Although generally effective in operation, the circular cross-sections of these two passages have been discovered not to have a sufficiently small enough surface area to effectively control the amount of foam components through the dispenser at low flows.

The present invention is thus directed to an improved means for controlling the flow of foam components in dispensers of the type shown in FIG. 1.

Turning now to FIG. 2, a dispensing apparatus 20 constructed in accordance with the principles of the present invention is illustrated in cross-section. The dispensing apparatus 20 of this embodiment, may take the form of a gun, having a body portion 21 with a handle 22 depending downwardly therefrom to provide a location where the dispensing apparatus can be easily gripped by the hand of a user. A trigger member 28 is rotatably mounted to the body portion 21 and is capable of moving in an arc toward and away from the trigger 22. This movement may be characterized as reciprocal movement in that a user can grasp both the handle 22 and the trigger 28 with one hand and squeeze the trigger 28 to displace it in an arc toward the handle 22. A torsion spring 30 is provided and is disposed between the handle 21 and the trigger 28. to not only provide a measure of resistance to the trigger grasping movement, but also to provide a force mechanism that applies a return force that returns the trigger 28 to its outermost location as shown in FIGS. 1 and 2, the spring 30 is held within seats 31 in the interior of the handle 22 and trigger 28.

The trigger 28 is rotatably mounted to the body portion 21 of the dispensing apparatus by way of a yoke, or other Y-shaped member 32 that is formed integrally with the trigger 28 at one end thereof. This mounting is effected by way of a spool valve 40 that is received within a corresponding cylindrical recess or seat portion 41 that is formed in the body portion 21. This recess 41 preferably extends completely through the body portion 21 in a direction transverse to a longitudinal axis of the dispenser 20.

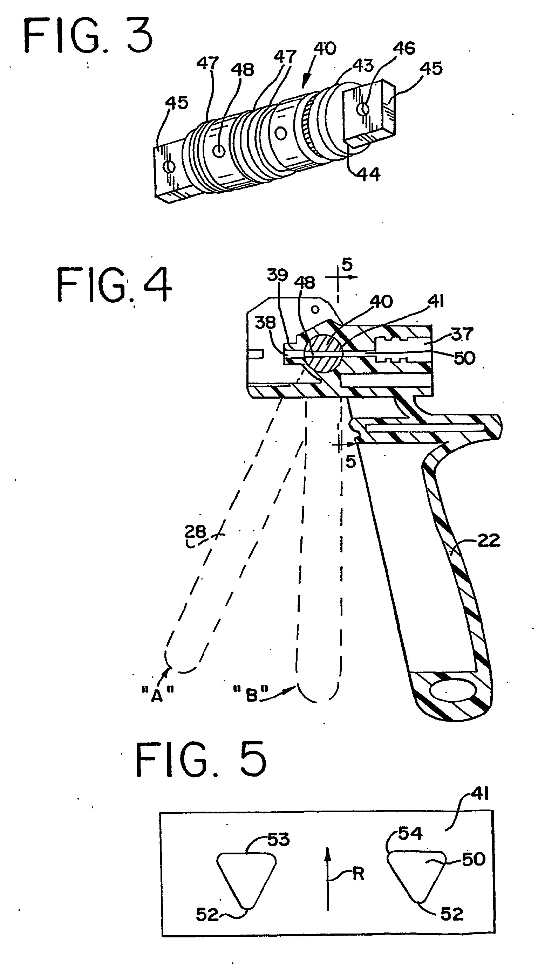

The spool valve 40 is shown by itself in FIG. 3. It has a cylindrical body portion 43 with a pair of end tabs 45 formed therewith that project outwardly from the ends 44 of the body portion 43. These end tabs 45 are plate-like in nature so that they may conveniently fit within a pair of slots 33 that are formed in the arms of the yoke 32. The end tabs 45 may include holes 46 disposed therein that provide a means for reliably securing the trigger 28 to the spool valve 40. As illustrated in FIGS. 1 and 2, this securement may be effected by screws 47, or other suitable fasteners.

As described in the aforementioned patents, the spool valve 40 may further include in its body portion a series of channels 47 that receive O-rings or any other sealing member top provide a seal within the body portion recess 41 to hold the spool valve 40 in place in the body portion 21 and to prevent any foam components passing through it from exiting out the sides of the recess 41.

In order to provide a path for foam components through the dispenser 20, the spool valve 40 preferably has a pair of flow passages 48 formed in the solid parts of the body portion 43 that lie between the O-ring grooves or channels 47. This solid portion acts as a valve body to seal against the seat of the dispenser body portion. These flow passages 48 are fixed with respect to the end tabs 45 so they are moved when the trigger 28 is moved back and forth in its movement toward and away from the dispenser handle 22. This movement is selectively controlled by the user when the trigger 28 is grasped. This movement is intended to bring the spool valve flow passages 48 into alignment and communication with the inlet passages 50 that are formed in the dispenser body 21.

As noted above, the dispenser 20 includes a pair of inlet connections 23, each of which has a hollow interior passage 36 extending therethrough. These inlet connections are received within a pair of corresponding bores 37 formed in the dispenser body portion 21. Also formed in the dispenser body portion 21 are inlet passages 50 that extend between the bores 37 through the seat and into communication with the seat recess 41 that receives the spool valve 40. This is best illustrated in FIG. 4, which shows the spool valve flow passages 48 aligned and mating with the body portion inlet passages 50. When so mated, a flow path is cooperatively defined through the dispenser body portion 21 and the spool valve 40. This flow path is extended by way of a pair of exit passages 38 that are formed in the dispenser body portion 21 forward or downstream of the spool valve recess 41. These exit passages 38 may be formed as projections 39 that are engaged by corresponding opposing openings (not shown) formed in the rear of the mixing and dispensing nozzle 27 (FIG. 1) wherein the two foam components are mixed and reacted together to form an expandable foam. Hence, it will be understood that movement of the trigger 22 brings the spool valve flow passages 48 into communication with the two passages 38 and 50.

As stated above, it has been discovered that known dispensers that use passages having circular cross-sections throughout the dispenser do not provide effective metering of the dispensing of the foam components at low flow conditions where the user desires to lay down beads of foam of reduced size. The present invention offers a solution to this problem and does so by making the foam passages in the body portion and spool valve 50, 48 different. This "difference" refers to the cross-section of the passages. The present invention utilizes, in one exemplary embodiment, spool valve flow passages 48 that are circular or cylindrical and which may be easily formed such as by drilling, and dispenser body portion inlet passages 50 that are non-circular. In the first preferred embodiment, and illustrated in FIG. 5, these passages 50 have a general triangular cross-section, which each such passage 50 having an initial apex portion 52 that widens to a base portion 53. The triangular cross-sections have multiple interior corners 54 at locations where the sides of the cross-section meet.

The non-circular cross-sections are most easily formed in the dispenser body portion 21 during the injection molding thereof. Such cross-sections may also be formed in the spool valve body portion 43, but such forming would have to be done by way of swaging, cold-forming or EDM (electro-discharge machining), all of which are more expensive and complicated than simple drilling.

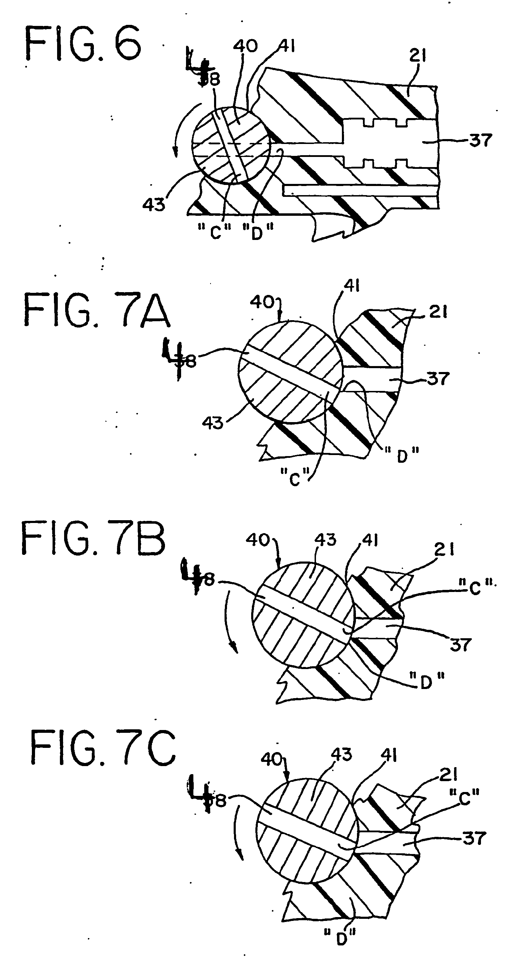

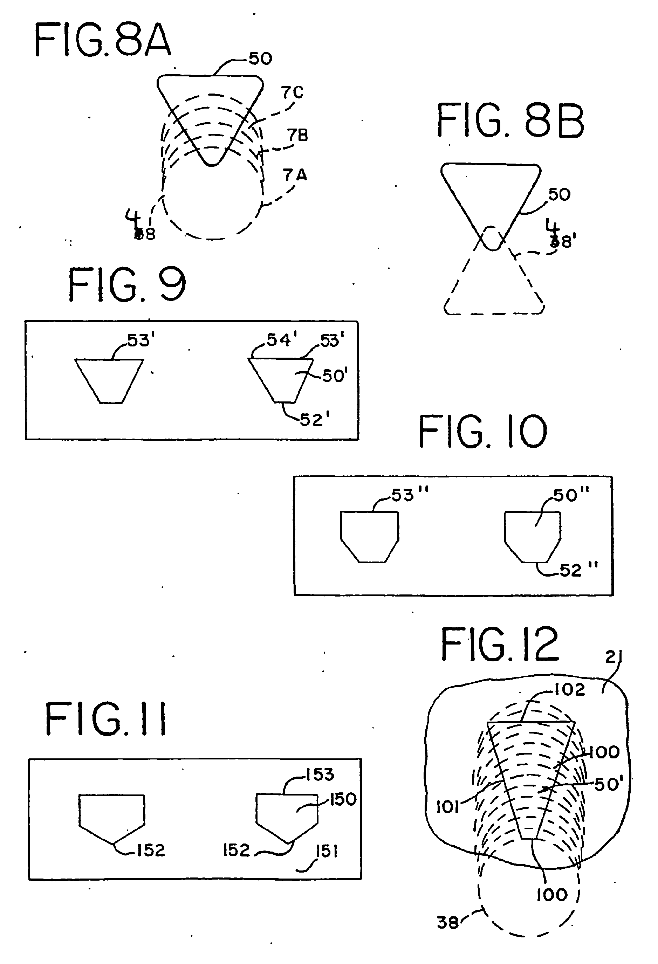

Where the user desires to lay down a small bead of foam at low-flow conditions, the user squeezes the trigger 28 in an incremental manner so that the two-flow passages 48, 50 make just one initial alignment contact, such as illustrated in FIG. 7A. The spool valve 40 rotates in a counterclockwise manner so that the top edges "C"of the spool valve flow passages 48 will near and communicate with the lower edge "D" of the body portion inlet passages 50. Such an initial communication is shown in FIG. 7A in section and in superimposition in FIG. 8 at 7A. It can be seen in FIGS. 5 and 8 that with a triangular cross-section, the area of the inlet flow passage 48 increases in the direction of rotation of the spool valve 40, indicated by the arrows R in FIG. 5 and 7A-C.

The use of cross-sections for the inlet passages 50 that are different than the cross-sections of the spool valve flow passages 48 significantly decreases the surface area available at their intersection available for the foam components to pass through, thereby improving the foam metering function of the dispenser 20 at low-flow conditions. When a triangular cross-section as shown in FIGS. 5, 8A and 8B is used, the initial flow is controlled by the intersection of the two passages and particularly by the tip of the triangle. As the trigger is depressed further so that the spool valve 40 rotates and the spool valve flow passages 48 are brought into phase or alignment with the body portion inlet passages 50, the surface area of the inlet passages of the triangle that intersects with that of the circle of the spool valve flow passages increases to increase the flow. Further depression of the trigger results in full registration between the circular cross-section (or orifice) of the spool valve flow passage 48 and the full triangular cross-section (or orifice) of the body portion inlet passages 50.

It is important to note that the desired flow characteristics can be raised by varying the baseline 53 of the triangle 50. Increasing the baseline 53 will permit one to accommodate larger flow rates. The triangular orifice 50 may be molded into the body portion 21 of the dispenser 20. The relationship that occurs between the two orifices when a triangular shape is used is diagrammatically illustrated in FIG. 8A where the triangular orifice 50 is illustrated in solid line and the movement of the circular orifice of the spool valve flow passage 48 is illustrated in broken lines. The broken circles that correspond approximately to the positions shown in cross-section in FIGS. 7A-7C are labeled "7A", "7B" and "7C" in FIG. 8.

FIG. 9 illustrates another suitable cross-section and configuration that is believed to be similarly useful as the triangular one previously discussed. In FIG. 9, the inlet passage 50' is formed as a trapezoid, having two parallel sides that are connected by two non-parallel sides. In this instance, the cross-section is polygonal, having at least four interior corners 54' and having a width (and hence, surface area) that increases from its narrow leading edge 52' to its widest point at its baseline 53'. It will be understood that the interior corners may be sharp corners that terminate in a point or dull corners that have a slightly blunt, or rounded profile.

FIG. 10 illustrates another embodiment wherein the inlet passage orifice 50" is six-sided polygon, also with a leading edge 52" that is narrower than the baseline portion 53" thereof. Likewise, FIG. 11 illustrates yet another embodiment wherein the inlet passage orifice 150 is a five-sided polygon having an apex 151 at its leading edge 152 and a width that partially increases as it extends toward a baseline 153 of the orifice 150.

FIG. 12 illustrates the successive intersection of the circular orifices of the spool valve flow passages with a trapezoidal or "pie-shaped" orifice 50' that is formed in the dispenser body portion 21 and which opens to body portion spool valve-receiving recess 41. The orifice 50' has a narrow leading edge 100 that acts as an apex of the orifice. This leading edge 100 defines the initial width of the orifice 50' that is met by the circular flow passages 48 of the spool valve which move from the orifice leading edge 100 to orifice baseline 102 that has a greater width than that of the leading edge 100. Two side walls 101 of the orifice extend at an angle from the leading edge 100 to the baseline 102 and at outward angles so that as the spool valve and its corresponding flow passages 38 are rotated within the recess. The spool valve passages are incrementally moved into intersection with the inlet body portion orifice 50'. FIG. 12 illustrates each incremental increase in the surface area of spool valve passage - inlet passage intersection. Suitable results have been obtained with orifices having leading edges of about 0.010 inches (0.254 mm), baselines of about 0.063 inches (1.6 mm) and separated by a distance of about 0.086 inches (2.18 mm). Such dimensions give an overall area of the inlet passage of about 0.003 square inches (1.94 mm²).

The narrow leading edge of the orifice give good metering capability at low-flow conditions, while the board baseline of the orifice gives full flow and output when spool valve flow passage circular orifice completely overlies the inlet passage 50.

Similar results may be obtained by using, as illustrated in FIG. 8B, a triangular cross-section 48' for the spool valve passage orifice. This will increase the expense of the dispenser, in that such a cross-section must be swaged, cold formed, etc. rather than simply drilled.

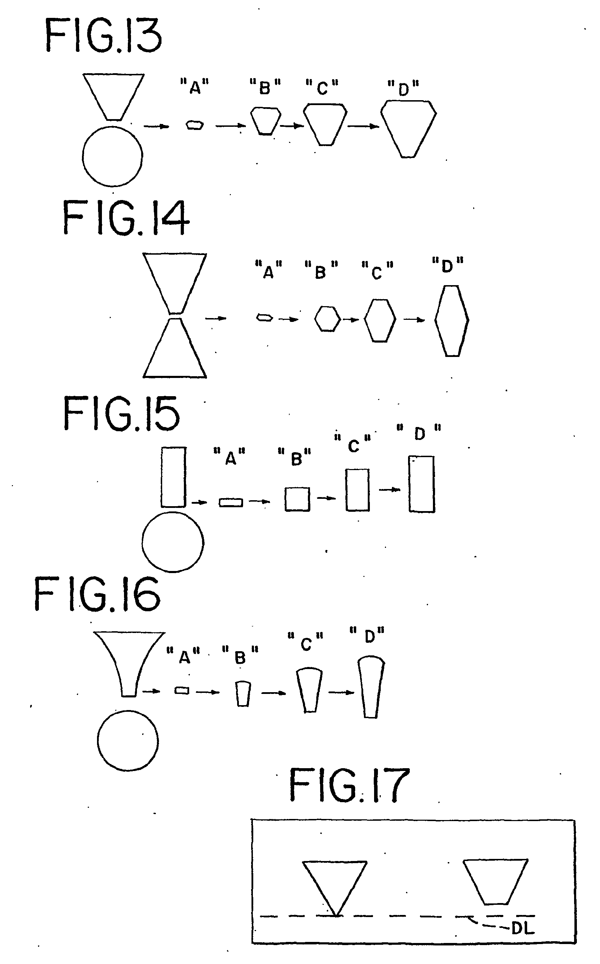

FIG. 13-16 illustrate, schematically, different cross-section flow passages and the increasing cross-section resulting from incrementally advancing one passage upon the other. In FIG. 13, the passages are circular and triangular which result in areas from about 0.001 square inches (0.645 mm²) in "A" to about 0.0032 square inches (2.06 mm²) in "D".

In FIG. 14, both passages have trapezoidal style passages which yield an area of about 0.0001 square inches (0.0645 mm²) as shown in "A" where the two passages are just initially intersecting to about 0.0023 square inches (1.48 mm²) in "D" where the two passages are fully intersected with each other.

In FIG. 15, one passage is circular while the other is rectangular. This combination yields an initial area of about 0.0002 square inches (0.129 mm²) at "A" to about 0.0024 square inches (1.55 mm²) at "D" where the two passages are fully intersected.

Lastly, FIG.16 illustrates the use of a circular passage and a "horn" like passage that yield an initial intersection of about 0.0001 square inches (0.0645 mm²) at "A" to about 0.0018 square inches (1.16 mm²) at full intersection at "D". With the use of a horn-like passage shown in "D" of FIG. 16, the rate of increase in the flow may be calculated to expand in a non-linear fashion, in contrast to the linear increase experienced with the other embodiments.

Additionally, as shown in FIG. 17, two different passage shapes may be formed in the seat portion of the dispenser body, as well as offset from a datum line "DL" in order to permit the adjustment of the flow rates of dissimilar materials, as opposed to their alignment of a common datum line as illustrated in the other embodiments.

Although the detailed description has been given in terms of using two reactive foam components as the fluids dispensed by the apparatus, it will be understood that the present invention may be utilized in other fluid applications and that the orientation of the spool valve may be other than horizontal.

## Claims

1. A dispensing apparatus (20) for selectively dispensing a two-component foam from a foam supply (25) wherein the apparatus includes a body portion (21) and a trigger (28) movably mounted thereto, the body portion having a pair of inlet connections (23) for connecting to a pair of foam component supply hoses (24) that are attached to supplies of first and second foam components, the inlet connections communicating with inlet passages (50) formed in said dispenser body portion, said body portion having a spool valve (40) rotatably mounted in a seat of said body portion that is interposed between the body portion inlet passages and a mixing nozzle (27) disposed on said dispensing apparatus, said spool valve having a pair of flow passages (48) formed therein and being operable by an operator to bring the spool valve passages into alignment with said body portion inlet passages, **characterized in that**:
the body portion inlet passages have polygonal cross-sections.

2. The dispensing apparatus of claim 1, wherein said spool valve passages are circular in cross-section and said body portion inlet passages are triangular in cross-section.

3. The dispensing apparatus of claim 1, wherein each of said spool valve passages has a circular cross-section and each of said body portion inlet passages has a polygonal cross-section that includes a plurality of interior corners formed therein.

4. The dispensing apparatus of claim 3, wherein said dispenser body portion inlet passage cross-sections include three interior corners.

5. The dispensing apparatus of claim 3, wherein said dispenser body portion inlet passage cross-sections include at least four interior corners.

6. The dispensing apparatus of claim 1, wherein said spool valve flow passages are circular in cross-section and said dispenser body portion inlet passages are trapezoidal in cross-section.

7. The dispensing apparatus of claim 6, wherein each of said dispenser body portion inlet passages have a base that is disposed opposite of an apex portion, such that an area of said passage increases from the apex portion to the base.

8. The dispensing apparatus of claim 1, wherein each of said dispenser body portion inlet passages have an area of about 0.003 square inches.

9. The dispensing apparatus as claimed in anyone of the preceding claims, wherein each of said dispenser body inlet passages have a narrow leading edge that defines initial widths of said inlet passages, said initial widths increasing along corresponding lengths of said passages up to a baseline of said passage.

10. The dispensing apparatus as claimed is anyone of the preceding claims, wherein said spool valve is formed from metal and said dispenser body portion is formed from plastic.

11. The dispensing apparatus of claim 10, wherein said dispenser body portion is injection molded.

12. The dispensing apparatus of claim 1, wherein said spool valve passages are generally circular in cross-section and said body portion inlet passages are generally rectangular.

13. The dispensing apparatus of claim 1, wherein said spool valve passages are generally circular in cross-section and said body portion inlet passages have a horn-like configuration with a thin body cross-section that increases to a wider body cross-section.

14. The dispensing apparatus of claim 1, wherein said spool valve flow passages and said dispenser body portion inlet passages have triangular cross-sections.

15. A foam dispensing apparatus as claimed in anyone of the preceding claims
the spool valve being rotatable in said recess and the trigger is operatively connected to said spool valve, the trigger extending down from said body portion and being spaced apart therefrom, whereby, said trigger is movable toward said handle whereby said spool valve passages are brought into communication with said inlet and exit passages, thereby defining two paths through said dispenser body and said spool valve to allow passage of foam components from said inlet connections to said nozzle; and,
said spool valve passages having circular cross-sections and said inlet passages having polygonal cross-sections.

16. The dispensing apparatus of anyone of the preceding claims, wherein said inlet passages have leading edges that intersect first with said spool valve passages upon rotation of said spool valve by said trigger, said inlet passages having variable widths that increase from said leading edges to baselines of said inlet passages.

17. The dispensing apparatus of anyone of the preceding claims, wherein said inlet passages have cross-sections chosen from the group consisting of: triangular cross-sections, rectangular cross-sections, trapezoidal cross-sections, horn cross-sections.

18. The dispensing apparatus of anyone of the preceding claims, wherein said inlet passages are horizontally aligned along a common datum line.

19. The dispensing apparatus of anyone of the preceding claims, wherein said inlet passages are offset with respect to a common datum line.

## Patentansprüche

1. Ausgabevorrichtung (20) zum selektiven Ausgeben eines Zwei-Komponenten-Schaums aus einer Schaumzufuhrquelle (25), wobei die Vorrichtung einen Körperabschnitt (21) und einen daran beweglich angebrachten Abzug (28) umfasst, wobei der Körperabschnitt ein Paar Einlassverbindungen (23) zum Verbinden mit einem Paar Schaumkomponenten-Zufuhrschläuche (24) umfasst, die an Zufuhrquellen für eine erste und eine zweite Schaumkomponente befestigt sind, wobei die Einlassverbindungen mit in dem Ausgabevorrichtungskörperabschnitt gebildeten Einlassdurchlässen (50) in Verbindung stehen, wobei an dem Körperabschnitt ein Kolbenventil (40) drehbar in einem Sitz des Körperabschnitts angebracht ist, der zwischen den Körperabschnittseinlassdurchlässen und einer an der Ausgabevorrichtung angeordneten Mischdüse (27) angebracht ist, wobei das Kolbenventil ein Paar darin ausgebildete Fließdurchlässe (48) umfasst und durch einen Bediener bedienbar ist, um die Kolbenventildurchlässe in Ausrichtung mit den Körperabschnittseinlassdurchlässen zu bringen, **dadurch gekennzeichnet, dass**:
die Körperabschnittseinlassdurchlässe mehreckige Querschnitte aufweisen.

2. Ausgabevorrichtung nach Anspruch 1, wobei die Kolbenventildurchlässe einen kreisförmigen Querschnitt aufweisen und wobei die Körperabschnittseinlassdurchlässe einen dreieckigen Querschnitt aufweisen.

3. Ausgabevorrichtung nach Anspruch 1, wobei jeder der Kolbenventildurchlässe einen kreisförmigen Querschnitt aufweist und jeder der Körperabschnittseinlassdurchlässe einen mehreckigen Querschnitt aufweist, der eine Vielzahl darin gebildeter innerer Ecken umfasst.

4. Ausgabevorrichtung nach Anspruch 3, wobei die Querschnitte der Ausgabevorrichtungskörperabschnittseinlassdurchlässe drei innere Ecken umfassen.

5. Ausgabevorrichtung nach Anspruch 3, wobei die Querschnitte der Ausgabevorrichtungskörperabschnittseinlassdurchlässe wenigstens vier innere Ecken umfassen.

6. Ausgabevorrichtung nach Anspruch 1, wobei die Kolbenventil-Fließdurchlässe einen kreisförmigen Querschnitt aufweisen und die Ausgabevorrichtungskörperabschnittseinlassdurchlässe einen trapezoidförmigen Querschnitt aufweisen.

7. Ausgabevorrichtung nach Anspruch 6, wobei jeder der Ausgabevorrichtungskörperabschnittseinlassdurchlässe eine Basis aufweist, die gegenüber einem Spitzenabschnitt angeordnet ist, sodass sich ein Bereich des Durchlasses von dem Spitzenabschnitt zu der Basis vergrößert.

8. Ausgabevorrichtung nach Anspruch 1, wobei jeder der Ausgabevorrichtungskörperabschnittseinlassdurchlässe einen Bereich von ungefähr 0,003 Quadratzoll aufweist.

9. Ausgabevorrichtung nach einem der vorangehenden Ansprüche, wobei jeder der Ausgabevorrichtungskörpereinlassdurchlässe einen engen Anströmrand aufweist, der anfängliche Weiten der Einlassdurchlässe definiert, wobei die anfänglichen Weiten entlang entsprechender Längen der Durchlässe bis zu einer Grundlinie des Durchlasses zunehmen.

10. Ausgabevorrichtung nach einem der vorangehenden Ansprüche, wobei das Kolbenventil aus Metall gebildet ist und der Ausgabevorrichtungskörperabschnitt aus Kunststoff gebildet ist.

11. Ausgabevorrichtung nach Anspruch 10, wobei der Ausgabevorrichtungskörperabschnitt spritzgegossen ist.

12. Ausgabevorrichtung nach Anspruch 1, wobei die Kolbenventildurchlässe einen im Allgemeinen kreisförmigen Querschnitt aufweisen und die Körperabschnittseinlassdurchlässe im Allgemeinen rechteckig sind.

13. Ausgabevorrichtung nach Anspruch 1, wobei die Kolbenventildurchlässe einen im Allgemeinen kreisförmigen Querschnitt aufweisen und die Körperabschnittseinlassdurchlässe eine Horn-ähnliche Konfiguration mit einem dünnen Körperquerschnitt aufweisen, der sich zu einem weiteren Körperquerschnitt vergrößert.

14. Ausgabevorrichtung nach Anspruch 1, wobei die Kolbenventildurchlässe und die Ausgabevorrichtungskörperabschnittseinlassdurchlässe dreieckige Querschnitte aufweisen.

15. Schaumausgabevorrichtung nach einem der vorangehenden Ansprüche, wobei das Kolbenventil in der Aussparung drehbar ist und wobei der Abzug mit dem Kolbenventil betriebsmäßig verbunden ist, wobei sich der Abzug von dem Körperabschnitt abwärts erstreckt und dazu beabstandet ist, wodurch der Abzug zu dem Griff hin beweglich ist, wodurch die Kolbenventildurchlässe in Verbindung mit den Einlass- und Auslassdurchlässen gebracht werden, wodurch zwei Wege durch den Ausgabevorrichtungskörper und das Kolbenventil definiert werden, um den Durchlass der Schaumkomponenten von den Einlassverbindungen zu der Düse zu ermöglichen; und
wobei die Kolbenventildurchlässe kreisförmige Querschnitte aufweisen und die Einlassdurchlässe mehreckige Querschnitte aufweisen.

16. Ausgabevorrichtung nach einem der vorangehenden Ansprüche, wobei die Einlassdurchlässe Anströmränder aufweisen, die sich nach dem Drehen des Kolbenventils durch den Abzug zuerst mit den Kolbenventildurchlässen schneiden, wobei die Einlassdurchlässe variable Weiten aufweisen, die von den Anströmrändern zu der jeweiligen Basis der Einlassdurchlässe hin zunehmen.

17. Ausgabevorrichtung nach einem der vorangehenden Ansprüche, wobei die Einlassdurchlässe Querschnitte aufweisen, die aus der folgenden Gruppe gewählt sind: dreieckige Querschnitte, rechteckige Querschnitte, trapezoidförmige Querschnitte, hornförmige Querschnitte.

18. Ausgabevorrichtung nach einem der vorangehenden Ansprüche, wobei die Einlassdurchlässe horizontal entlang einer gemeinsamen Bezugslinie ausgerichtet sind.

19. Ausgabevorrichtung nach einem der vorangehenden Ansprüche, wobei die Einlassdurchlässe bezüglich einer gemeinsamen Bezugslinie versetzt sind.

## Revendications

1. Distributeur (20) servant à distribuer de manière sélective une mousse à deux constituants depuis une source d'alimentation (25) en mousse, le distributeur comprenant un corps (21) et une gâchette (28) montée de manière mobile sur celui-ci, le corps ayant une paire de raccordements d'entrée (23) destinés à être raccordés à une paire de tuyaux souples (24) d'alimentation en constituants de mousse qui sont fixés à des réservoirs d'un premier et d'un second constituants de mousse, les raccordements d'entrée communiquant avec des passages d'entrée (50) formés dans ledit corps de distributeur, ledit corps ayant un distributeur à tiroir cylindrique (40) monté de manière rotative dans un logement dudit corps intercalé entre les passages d'entrée du corps et une buse de mélange (27) disposée sur ledit distributeur, ledit distributeur à tiroir cylindrique ayant une paire de passages d'écoulement (48) formés dans celui-ci et pouvant être actionnés par un opérateur pour aligner les passages du distributeur à tiroir cylindrique avec lesdits passages d'entrée du corps, **caractérisé en ce que** :
les passages d'entrée du corps ont des sections transversales polygonales.

2. Distributeur selon la revendication 1, dans lequel lesdits passages du distributeur à tiroir cylindrique ont une section transversale circulaire et lesdits passages d'entrée du corps ont une section transversale triangulaire.

3. Distributeur selon la revendication 1, dans lequel chacun desdits passages du distributeur à tiroir cylindrique a une section transversale circulaire et chacun desdits passages d'entrée du corps a une section transversale polygonale comportant une pluralité d'angles intérieurs formés dans celle-ci:

4. Distributeur selon la revendication 3, dans lequel lesdites sections transversales des passages d'entrée du corps du distributeur comportent trois angles intérieurs.

5. Distributeur selon la revendication 3, dans lequel lesdites sections transversales des passages d'entrée du corps du distributeur comportent au moins quatre angles intérieurs.

6. Distributeur selon la revendication 1, dans lequel lesdits passages d'écoulement du distributeur à tiroir cylindrique ont une section transversale circulaire et lesdits passages d'entrée du corps du distributeur ont une section transversale trapézoïdale.

7. Distributeur selon la revendication 6, dans lequel chacun desdits passages d'entrée du corps du distributeur a une base qui est disposée à l'opposé d'un sommet, si bien que la section dudit passage augmente du sommet vers la base.

8. Distributeur selon la revendication 1, dans lequel chacun desdits passages d'entrée du corps de distributeur a une section d'environ 0,019 cm².

9. Distributeur selon l'une quelconque des revendications précédentes, dans lequel chacun desdits passages d'entrée du corps de distributeur a un bord antérieur étroit qui définit des largeurs initiales desdits passages d'entrée, lesdites largeurs initiales augmentant sur des longueurs correspondantes desdits passages jusqu'à une ligne de base dudit passage.

10. Distributeur selon l'une quelconque des revendications précédentes, dans lequel ledit distributeur à tiroir cylindrique est en métal et ledit corps du distributeur est en matière plastique.

11. Distributeur selon la revendication 10, dans lequel ledit corps de distributeur est moulé par injection.

12. Distributeur selon la revendication 1, dans lequel lesdits passages du distributeur à tiroir cylindrique ont une section transversale globalement circulaire et lesdits passages d'entrée du corps sont globalement rectangulaires.

13. Distributeur selon la revendication 1, dans lequel lesdits passages du distributeur à tiroir cylindrique ont une section transversale globalement circulaire et lesdits passages d'entrée du corps ont une configuration analogue à une corne avec une section transversale mince du corps qui augmente jusqu'à devenir une section transversale plus large du corps.

14. Distributeur selon la revendication 1, dans lequel lesdits passages d'écoulement du distributeur à tiroir cylindrique et lesdits passages d'entrée du corps du distributeur ont des sections transversales triangulaires.

15. Distributeur de mousse selon l'une quelconque des revendications précédentes, le distributeur à tiroir cylindrique pouvant tourner dans ledit évidement et la gâchette coopère avec ledit distributeur à tiroir, la gâchette s'étendant vers le bas depuis ledit corps et étant espacée par rapport à celui-ci, grâce à quoi ladite gâchette est déplaçable vers ladite poignée, ce qui permet de faire communiquer lesdits passages du distributeur à tiroir avec lesdits passages d'entrée et de sortie, en définissant de la sorte deux trajets à travers ledit corps de distributeur et ledit distributeur à tiroir pour permettre le passage de constituants de mousse desdits raccordements d'entrée à ladite buse ; et
lesdits passages du distributeur à tiroir ayant une section transversale circulaire et lesdits passages d'entrée ayant une section transversale polygonale.

16. Distributeur selon l'une quelconque des revendications précédentes, dans lequel lesdits passages d'entrée ont des bords avant qui croisent pour commencer lesdits passages du distributeur à tiroir au moment de la rotation dudit distributeur à tiroir sous l'effet de ladite gâchette, lesdits passages d'entrée ayant une largeur variable qui augmente depuis lesdits bords avant vers les lignes de base desdits passages d'entrée.

17. Distributeur selon l'une quelconque des revendications précédentes, dans lequel lesdits passages d'entrée ont une section transversale choisie dans le groupe comprenant une section transversale triangulaire, une section transversale rectangulaire, une section transversale trapézoïdale, une section transversale cornue.

18. Distributeur selon l'une quelconque des revendications précédentes, dans lequel lesdits passages d'entrée sont alignés horizontalement sur une ligne de référence commune.

19. Distributeur selon l'une quelconque des revendications précédentes, dans lequel lesdits passages d'entrée sont décalés par rapport à une ligne de référence commune.
